# EUROPEAN PATENT SPECIFICATION

(11) **EP 2 891 990 B1**
(45) Date of publication and mention of the grant of the patent: **31.01.2018**
(21) Application number: 13797751.8
(22) Date of filing: 26.07.2013
(51) Int. Cl.: H04N 21/8549, H04N 21/234, G06F 17/30, G06T 7/20, G06K 9/00

(54) **METHOD AND DEVICE FOR MONITORING VIDEO DIGEST**
VERFAHREN UND VORRICHTUNG ZUR ÜBERWACHUNG EINES VIDEOAUSZUGES
PROCÉDÉ ET DISPOSITIF POUR SURVEILLER UN CONDENSÉ VIDÉO

(30) Priority: 30.08.2012 CN 201210315123
(43) Date of publication of application: 08.07.2015
(73) Proprietor: ZTE Corporation, Shenzhen, Guangdong 518057 (CN)
(72) Inventor: WANG, Bofei, Shenzhen Guangdong 518057 (CN)
(74) Representative: Bittner, Bernhard
(86) International application number: PCT/CN2013/080211
(87) International publication number: WO 2013/178172

(56) References cited:
- EP-A2- 1 043 664
- CN-A- 1 822 645
- CN-A- 102 222 104
- CN-A- 102 375 816
- CN-A- 102 395 029
- US-A1- 2006 092 280
- US-A1- 2007 214 418
- US-A1- 2009 136 141

## Description

### TECHNICAL FIELD

The disclosure relates to the field of image processing technology, and more particularly to a method and device for summarizing a surveillance video.

### BACKGROUND

With development of science and technology and strengthening of public safety awareness, there is a sharp increase in a number of surveillance cameras mounted in public places. Such cameras work 24 hours each day, recording a massive amount of video data.

Due to limited surveillance personnel and inherent weakness of the human being, a hidden problem in a video may not be discovered in time in surveillance. A video has to be browsed and analyzed afterwards. However, it takes a lot of time and effort to browse massive video data. Thus, the vast majority of recorded surveillance videos are never browsed or examined. Thus, there is a pressing need in the current surveillance industry for a solution for browsing a lengthy surveillance video completely and quickly.

Surveillance video summarization is a video compression technology capable of providing a video much shorter than an original video. The short video can be browsed, quickly without losing event information.

Existing surveillance video summarization is mainly implemented in two modes. In a first mode, a surveillance video is summarized based on a frame difference. In the first mode, a moving object is detected mainly by frame differentiation, and any moving object in a video is stored to form a video summary. The first mode is disadvantageous mainly as it produces a low video compression rate and detects no key event. In a second mode, a video is summarized based on moving object time-space transformation. In the second mode, it is possible to extract moving objects at different moments and merging the extracted moving objects into one frame. This may significantly improve a compression rate in summarization, however with poor visibility and no key event detection. Both modes depend on moving object detection, which at present may be implemented in real time in many ways such as by using a GMM algorithm, a Codebook algorithm, a Vibe algorithm or the like. However, in such a way, frames around a key event in massive video data cannot be positioned, thereby failing to obtain accurate key video data information in time.

US2009/0136141 discloses a method of summarizing a segment of surveillance video.

### SUMMARY

In view of this, embodiments of the disclosure provide a method and device for summarizing a surveillance video, capable of positioning frames around a key event in massive video data to obtain accurate key video data information in time. A method and device according to the independent claims have been invented. The disclosure has the following beneficial effects.

With the method and device for summarizing a surveillance video disclosed herein, the foreground of each frame of a surveillance video is filtered to obtain a final moving object; after each frame has gone through the filtering, it is determined whether a frame is a key-movement frame by detecting a relation between a first moving object in the frame and a second moving object in a preceding frame or by specific event detection; frames before and after a determined key-movement frame are extracted and a video summary is formed using the key-movement frame and the frames extracted. According to an embodiment herein, key-movement frame detection is implemented according to an inter-frame moving object relation or by specific event detection; a video summary is formed by extracting frames before and after a key-movement frame, focusing on a frame with a notable change with respect to the last frame; a key event is positioned accurately while keeping information before and after the key event, such that a well-compressed video summary may be formed, allowing to position frames around a key event in massive video data to obtain accurate key video data information in time.

### BRIEF DESCRIPTION OF THE DRAWINGS

Fig.1 is a flowchart of a method for summarizing a surveillance video according to an embodiment herein.
Fig.2 is a flowchart of determining whether a frame is a key-movement frame by detecting a relation between a first moving object in the frame and a second moving object in a last frame according to an embodiment herein.
Fig.3 is a schematic diagram of a structure of a device for summarizing a surveillance video according to an embodiment herein.

### DETAILED DESCRIPTION

Implementation of the method and device for summarizing a surveillance video disclosed herein is described below with reference to accompanying drawings.

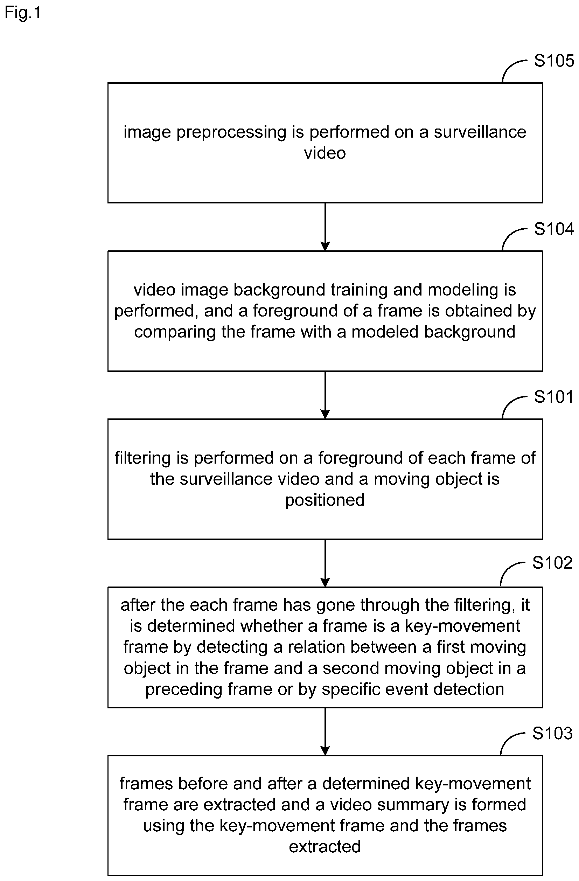

The method for summarizing a surveillance video provided herein is as shown in Fig.1. For clarity, a moving object in a (current) frame is referred to as a first moving object and that in a last/preceding frame is referred to as a second moving object. The method includes steps as follows.

In step 101, filtering is performed on a foreground of each frame of the surveillance video and a moving object is positioned.

In step 102, after each frame has gone through the filtering in step 101, it is determined whether a frame is a key-movement frame by detecting a relation between a first moving object in the frame and a second moving object in a preceding frame or by specific event detection.

In step 103, frames before and after a key-movement frame determined in step 102 are extracted and a video summary is formed using the key-movement frame and the frames extracted.

Further, in Step 102, the relation between two moving objects may be determined as follows. It may be determined, with respect to the preceding frame, whether there is a new first moving object appearing in the frame, whether a (first) moving object disappears in the frame, whether moving objects merge in the frame, whether a moving object splits in the frame, whether the position of a moving object changes in the frame, and whether there is a morphological change of a moving object in the frame. When no new moving object appears in the frame, no moving object disappears in the frame, no moving objects merge in the frame, no moving object splits in the frame, and no moving object has any apparent displacement or morphological change in the frame, it indicates that the frame is not a key-movement frame. Otherwise when any such event occurs, it indicates that the frame is a key-movement frame.

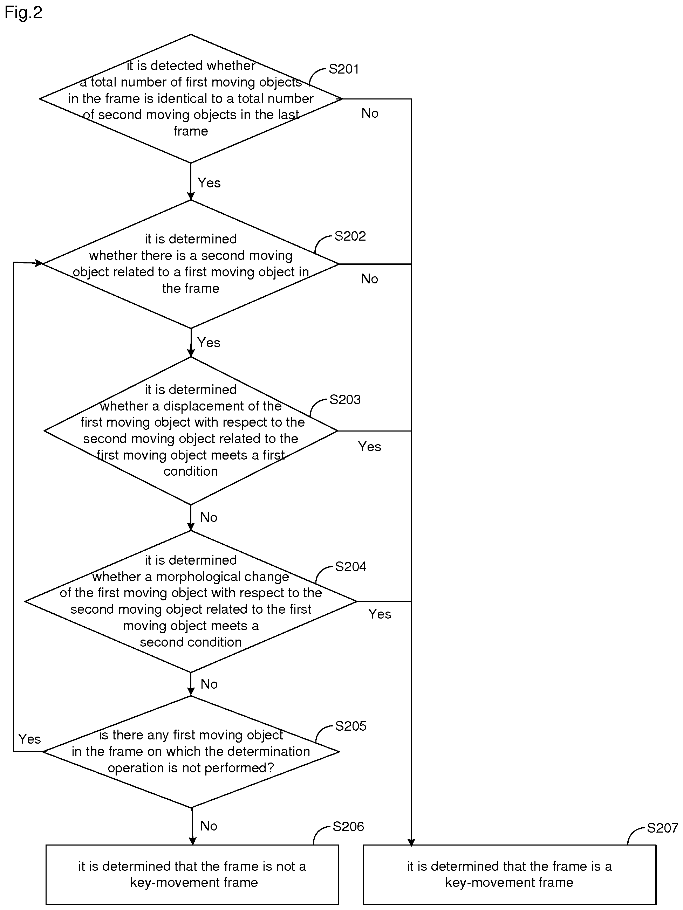

In Step 102, as shown in Fig.2, it may be determined whether a frame is a key-movement frame by detecting a relation between a first moving object in the frame and a second moving object in a last frame through a flow as follows.

In Step 201, it is detected whether a total number of first moving objects in the frame is identical to a total number of second moving objects in the last frame. The flow goes to Step 207 when the two total numbers are different from each other, or to Step 202 when the two total numbers are the same.

In Step 202, it is determined whether there is a second moving object related to a first moving object in the frame. The flow goes to Step 207 when there is no second moving object related to the first moving object, or to Step 203 when there is a second moving object related to the first moving object.

In Step 203, it is determined whether a displacement of the first moving object with respect to the second moving object related to the first moving object meets a first condition. The first condition requires that a ratio of a distance between a centroid of the first moving object and a centroid of the second moving object related to the first moving object to a diagonal of a rectangle circumscribing the second moving object is greater than or equal to a preset threshold T3. The flow goes to Step 207 when the first condition is met, or to Step 204 when the first condition is not met.

In Step 204, it is determined whether a morphological change of the first moving object with respect to the second moving object related to the first moving object meets a second condition. The second condition requires that a ratio of an absolute change in an aspect ratio of a rectangle circumscribing the first moving object with respect to a rectangle circumscribing the second moving object related to the first moving object to an aspect ratio of the rectangle circumscribing the second moving object is greater than or equal to a preset threshold T4. The flow goes to Step 207 when the second condition is met, or to Step 202 when the second condition is not met.

In Step 205, it is determined there is any first moving object in the frame on which the determination operation is not performed. The flow goes to Step 202 when there is, or to Step 206 when all first moving objects have gone through such determination.

In Step 206, it is determined that the frame is not a key-movement frame, and the present flow ends.

In Step 207, it is determined that the frame is a key-movement frame, and the present flow ends.

Further, in Step 202, it may be determined whether there is a second moving object related to a first moving object in the frame as follows.

A ratio S of an area in which the first moving object overlaps with a second moving object to an area of the second moving object may be calculated. A histogram similarity H of the first moving object to the second moving object may be calculated. It may be determined that the first moving object is related to the second moving object when the calculated S is greater than a preset threshold T1 and the calculated H is greater than a preset threshold T2.

The histogram similarity H used to determine the relation between two moving objects may be determined using a Bhattacharyya Distance, which is existing art and is therefore not repeated herein. The preset threshold T1 may be 0.1. The preset threshold T2 may be 0.7. Such preferred values of the T1 and T2 may be obtained from a plurality of tests.

There may not be any strict order for executing the steps 203 and 204. Step 204 may be executed after or before Step 203. The T 3 may be 0.5. The T4 may be 0.2. Such preferred values of the T3 and T4 may be obtained from a plurality of tests.

In Step 204, an aspect ratio of a rectangle circumscribing a moving object may be a width-to-height ratio or a height-to-width ratio.

Further, in Step 102, it may be determined whether a frame is a key-movement frame by specific event detection specifically as follows.

The frame may be determined as a key-movement frame when specific event detection is triggered in the frame. The specific event detection may refer to one or more of
an intrusion event detection, a line crossing event detection, a smoke event detection, an item movement event detection, and a group event detection. Such detections are all existing art and are therefore not repeated herein.

Further, in Step 101, a foreground of each frame of a surveillance video may be filtered and a moving object may be positioned as follows.

Any complete moving object in the foreground may be obtained by removing any scattered small object in the foreground (such as removing some noise points) and joining fragments of a broken object in the foreground (such as joining parts to restore an object the view of which being blocked). An area of a complete moving object may be calculated. Any moving object with an area greater than or equal to a threshold T6 may be positioned, that is, any moving object with an area smaller than T6 may be removed. The T6=p*A. The A is a video image area (the whole image area of a video) and the P is a preset coefficient.

The preset coefficient P may be 0.0005. The value of the P may be determined through a plurality of tests.

Removal of any scattered small object and joining fragments of a broken object in the foreground may be implemented by filtering a binary image resulting from moving object foreground detection using a median filter. An area of a moving object may be calculated through region marking. Both median filtering and region marking are existing art and are therefore not repeated herein.

Further, before the foreground is filtered in Step 101, the method further includes a Step 104 of performing video image foreground detection to obtain a foreground. Image background training and modeling may be performed on the surveillance video, and a foreground of a frame may be obtained by comparing the frame with a modeled background.

Foreground detection may be implemented using a Gaussian mixture model. Alternatively, the first K frames of video images may be trained to establish a GMM background model. Moving object detection may be carried out starting from the (K+1)th frame using the background model to obtain a foreground object. The K may range in 1-500. The K may be 100. The value of the K may be determined via a plurality of tests.

Further, before Step 104, the method may further include a Step 105 of performing image preprocessing on the surveillance video. The purpose of the preprocessing is mainly for making preparation for subsequent moving object detection. The preprocessing may include: noise removal, illumination compensation, image registration, and image resizing.

Noise of a video image may be removed by smoothing filtering using a 5*5 Gaussian smoothing filter. Then it may be determined whether the size of a video image to be preprocessed is within a specific range. The range may be set according to a real-time requirement to guarantee a video processing speed. When the size of the video image is not within the range, the image may be resized so using a bilinear interpolation algorithm. Illumination compensation is mainly for removing impact of illumination in determining a moving object. Image registration is mainly for removing video image dithering caused by an external factor. Specific implementation of the preprocessing may be existing art and therefore is not repeated herein.

In Step 103, frames before and after a determined key-movement frame may be extracted and a video summary may be formed using the key-movement frame and the frames extracted specifically as follows.

One of every N frames may be extracted from frames before and after the key-movement frame to obtain M frames before the key-movement frame and M frames after the key-movement frame. The video summary may be formed using the key-movement frame and the 2M frames extracted. Extraction of information before and after a key-movement frame enables more natural and smoother surveillance video summarization and guarantees information integrity. The range of the N may be [3, 8]. The N may be 5. The range of the M may be [1, 5]. The M may be 3. The ranges of the M and N may be empirical ranges resulting from a plurality of tests.

According to the method herein, a device for summarizing a surveillance video is also provided in an embodiment herein. The device addresses a problem in a way similar as the method for summarizing a surveillance video. Refer to Implementation of the method for that of the device, and any identical part is not repeated herein.

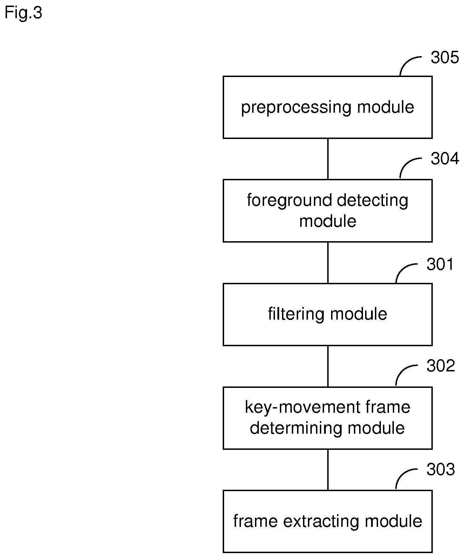

According to an embodiment herein, a device for summarizing a surveillance video, as shown in Fig.3, includes:
a filtering module 301 configured for filtering a foreground of each frame of a surveillance video and positioning a moving object;
a key-movement frame determining module 302 configured for: after the each frame has gone through the filtering, determining whether a frame is a key-movement frame by detecting a relation between a first moving object in the frame and a second moving object in a preceding frame or by specific event detection; and
a frame extracting module 303 configured for extracting frames before and after a determined key-movement frame and forming a video summary using the key-movement frame and the frames extracted.

The key-movement frame determining module 302 may be configured for: detecting whether a total number of first moving objects in the frame is identical to a total number of second moving objects in the preceding frame; when the two total numbers are different from each other, determining the frame as a key-movement frame; or otherwise when the two total numbers are identical to each other, further determining whether there is a second moving object related to a first moving object; when there is at least one first moving object to which no second moving object is related, determining the frame as a key-movement frame; or otherwise when each first moving object is related to a second moving object, further detecting a displacement and a morphological change of a first moving object with respect to a second moving object related to the first moving object; when there is at least one first moving object with a displacement meeting a first preset condition or with a morphological change meeting a second preset condition, determining the frame as a key-movement frame; or otherwise when there is no first moving object with a displacement meeting a first preset condition or a morphological change meeting a second preset condition, determining that the frame is not a key-movement frame; or determining the frame as a key-movement frame when specific event detection is triggered in the frame.

The first preset condition requires that a ratio of a distance between a centroid of the first moving object and a centroid of the second moving object related to the first moving object to a diagonal of a rectangle circumscribing the second moving object is greater than or equal to a preset threshold T3. The second preset condition requires that a ratio of an absolute change in an aspect ratio of a rectangle circumscribing the first moving object with respect to a rectangle circumscribing the second moving object related to the first moving object to an aspect ratio of the rectangle circumscribing the second moving object is greater than or equal to a preset threshold T4. The specific event detection may refer to one or more of an intrusion event detection, a line crossing event detection, a smoke event detection, an item movement event detection, and a group event detection.

The key-movement frame determining module 302 may be configured for: calculating a ratio S of an area in which a first moving object overlaps with a second moving object to an area of the second moving object; calculating a histogram similarity H of the first moving object to a second moving object; and determining that the first moving object is related to the second moving object when the calculated S is greater than a preset threshold T1 and the calculated H is greater than a preset threshold T2.

The filtering module 301 may be configured for: obtaining any complete moving object in the foreground by removing any scattered small object and joining fragments of a broken object in the foreground; and calculating an area of a complete moving object and positioning any moving object with an area greater than or equal to a threshold T6. The T6 = p*A. The A is a video image area. The P is a preset coefficient.

The frame extracting module 303 may be configured for extracting a frame every N frames before and after the key-movement frame to obtain M frames before the key-movement frame and M frames after the key-movement frame, and forming the video summary using the key-movement frame and the frames extracted. The N may range within [3, 8]. The M may range within [1, 5].

The device may further include a foreground detecting module 304 and a preprocessing module 305.

The foreground detecting module 304 may be configured for performing video image background training and modeling, and obtaining a foreground of a frame by comparing the frame with a modeled background.

The preprocessing module 305 may be configured for performing video image preprocessing, including: noise removal, image resizing, illumination compensation, and image registration.

With the method and device for summarizing a surveillance video disclosed herein, the foreground of each frame of a surveillance video is filtered to obtain a final moving object; after each frame has gone through the filtering, it is determined whether a frame is a key-movement frame by detecting a relation between a first moving object in the frame and a second moving object in a preceding frame or by specific event detection; frames before and after a determined key-movement frame are extracted and a video summary is formed using the key-movement frame and the frames extracted. According to an embodiment herein, key-movement frame detection is implemented according to an inter-frame moving object relation or by specific event detection; a video summary is formed by extracting frames before and after a key-movement frame, focusing on a frame with a notable change with respect to the last frame; a key event is positioned accurately while keeping information before and after the key event, such that a well-compressed video summary may be formed, allowing to position frames around a key event in massive video data to obtain accurate key video data information in time.

With the description herein, those skilled in the art can clearly understand that embodiments herein can be implemented by hardware or by software plus a necessary general hardware platform. Based on such understanding, a technical solution herein may be embodied in form of a software product. The software product may be stored in a nonvolatile memory medium such as a CD-ROM, a USB flash disk or a mobile hard disk drive including a plurality of instructions that allow a computer device such as a personal computer, a server or a network device to execute the method according to an embodiment herein.

Those skilled in the art will understand that a drawing herein is merely a schematic diagram of an embodiments, and a module or flow thereof is not necessarily a must for implementing the disclosure.

Those skilled in the art will understand that a module of the device according to an embodiment herein may be distributed in the device or modified as needed to be located in one or more devices different from the device. Modules according to the embodiments may be merged into one module. Alternatively, a module herein may be divided into a plurality of sub-modules.

The embodiment numbering herein is merely illustrative and is not to be construed as indication of superiority of one embodiment over another.

Apparently, those skilled in the art may make various modifications and variations to the present disclosure without departing from the scope of the present disclosure. Thus, if those modifications and variations of the present disclosure fall within the scope of the claims then the present disclosure is also intended to include such modifications and variations.

### INDUSTRIAL APPLICABILITY

According to an embodiment herein, key-movement frame detection is implemented according to an inter-frame moving object relation or by specific event detection; a video summary is formed by extracting frames before and after a key-movement frame, focusing on a frame with a notable change with respect to the last frame; a key event is positioned accurately while keeping information before and after the key event, such that a well-compressed video summary may be formed, allowing to position frames around a key event in massive video data to obtain accurate key video data information in time.

## Claims

1. A method for summarizing a surveillance video, comprising:
filtering a foreground of each frame of a surveillance video and positioning a moving object (S101);
after the each frame has gone through the filtering, determining whether a frame is a key-movement frame by detecting a relation between a first moving object in the frame and a second moving object in a preceding frame (S102); and
extracting frames before and after a determined key-movement frame and forming a video summary using the key-movement frame and the frames extracted (S103),
wherein the determining whether a frame is a key-movement frame by detecting a relation between a first moving object in the frame and a second moving object in a preceding frame comprises:
detecting whether a total number of first moving objects in the frame is identical to a total number of second moving objects in the preceding frame (S201); when the two total numbers are different from each other, determining the frame as a key-movement frame (S207); or otherwise when the two total numbers are identical to each other, for each first moving object in the frame (S205),
determining whether there is a second moving object in the preceding frame related to the each first moving object (S202); when there is at least one first moving object in the frame to which no second moving object in the preceding frame is related, determining the frame as a key-movement frame (S207); or otherwise when the each first moving object in the frame is related to a second moving object in the preceding frame,
detecting a displacement and a morphological change of the each first moving object with respect to the second moving object in the preceding frame related to the each first moving object (S203, S204); when there is at least one first moving object in the frame with a displacement meeting a first preset condition or with a morphological change meeting a second preset condition, determining the frame as a key-movement frame (S207); or otherwise when there is no first moving object in the frame with a displacement meeting a first preset condition or a morphological change meeting a second preset condition, determining that the frame is not a key-movement frame (S206), wherein
the first preset condition requires that a ratio of a distance between a centroid of the each first moving object and a centroid of the second moving object in the preceding frame related to the each first moving object to a diagonal of a rectangle circumscribing the second moving object in the preceding frame is greater than or equal to a preset threshold T3, and the second preset condition requires that a ratio of an absolute change in an aspect ratio of a rectangle circumscribing the each first moving object with respect to a rectangle circumscribing the second moving object in the preceding frame related to the each first moving object to an aspect ratio of the rectangle circumscribing the second moving object in the preceding frame is greater than or equal to a preset threshold T4.

2. The method according to claim 1, wherein the determining whether there is a second moving object in the preceding frame related to the each first moving object comprises:
calculating a ratio S of an area in which the each first moving object overlaps with a second moving object in the preceding frame to an area of the second moving object in the preceding frame;
calculating a histogram similarity H of the each first moving object to the second moving object in the preceding frame; and
determining that the each first moving object is related to the second moving object in the preceding frame when the calculated S is greater than a preset threshold T1 and the calculated H is greater than a preset threshold T2.

3. The method according to claim 1, wherein the filtering a foreground of each frame of a surveillance video and positioning a moving object comprises:
obtaining any complete moving object in the foreground by removing any scattered small object and joining fragments of a broken object in the foreground; and
calculating an area of a complete moving object and positioning any moving object with an area greater than or equal to a threshold T6, wherein
the T6 = p*A, the A being a video image area and the P being a preset coefficient.

4. The method according to claim 1, further comprising: before the filtering a foreground of each frame of a surveillance video, performing image foreground detection on the surveillance video by
performing image background training and modeling on the surveillance video, and obtaining a foreground of a frame by comparing the frame with a modeled background (S104).

5. The method according to claim 4, further comprising: before the performing image foreground detection on the surveillance video,
performing video image preprocessing (S105), comprising: noise removal, image resizing, illumination compensation, and image registration.

6. The method according to claim 1, wherein the extracting frames before and after a determined key-movement frame and forming a video summary using the key-movement frame and the frames extracted comprises:
extracting a frame every N frames before and after the key-movement frame to obtain M frames before the key-movement frame and M frames after the key-movement frame, and forming the video summary using the key-movement frame and the frames extracted.

7. A device for summarizing a surveillance video, comprising:
a filtering module (301) configured for filtering a foreground of each frame of a surveillance video and positioning a moving object;
a key-movement frame determining module (302) configured for: after the each frame has gone through the filtering, determining whether a frame is a key-movement frame by detecting a relation between a first moving object in the frame and a second moving object in a preceding frame; and
a frame extracting module (303) configured for extracting frames before and after a determined key-movement frame and forming a video summary using the key-movement frame and the frames extracted, wherein
the key-movement frame determining module (302) is configured for: detecting whether a total number of first moving objects in the frame is identical to a total number of second moving objects in the preceding frame; when the two total numbers are different from each other, determining the frame as a key-movement frame; or otherwise when the two total numbers are identical to each other, for each first moving object in the frame,
determining whether there is a second moving object in the preceding frame related to the each first moving object; when there is at least one first moving object in the frame to which no second moving object in the preceding frame is related, determining the frame as a key-movement frame; or otherwise when the each first moving object in the frame is related to a second moving object in the preceding frame,
detecting a displacement and a morphological change of the each first moving object with respect to the second moving object in the preceding frame related to the each first moving object; when there is at least one first moving object in the frame with a displacement meeting a first preset condition or with a morphological change meeting a second preset condition, determining the frame as a key-movement frame; or otherwise when there is no first moving object in the frame with a displacement meeting a first preset condition or a morphological change meeting a second preset condition, determining that the frame is not a key-movement frame, wherein
the first preset condition requires that a ratio of a distance between a centroid of the each first moving object and a centroid of the second moving object in the preceding frame related to the each first moving object to a diagonal of a rectangle circumscribing the second moving object in the preceding frame is greater than or equal to a preset threshold T3, and the second preset condition requires that a ratio of an absolute change in an aspect ratio of a rectangle circumscribing the each first moving object with respect to a rectangle circumscribing the second moving object in the preceding frame related to the each first moving object to an aspect ratio of the rectangle circumscribing the second moving object in the preceding frame is greater than or equal to a preset threshold T4.

8. The device according to claim 7, wherein
the key-movement frame determining module (302) is configured for: calculating a ratio S of an area in which the each first moving object overlaps with a second moving object in the preceding frame to an area of the second moving object in the preceding frame; calculating a histogram similarity H of the each first moving object to the second moving object in the preceding frame; and determining that the each first moving object is related to the second moving object in the preceding frame when the calculated S is greater than a preset threshold T1 and the calculated H is greater than a preset threshold T2.

9. The device according to claim 7, wherein
the filtering module (301) is configured for: obtaining any complete moving object in the foreground by removing any scattered small object and joining fragments of a broken object in the foreground; and calculating an area of a complete moving object and positioning any moving object with an area greater than or equal to a threshold T6, wherein
the T6 = p*A, the A being a video image area and the P being a preset coefficient.

10. The device according to claim 7, further comprising:
a foreground detecting module (304) configured for performing video image background training and modeling, and obtaining a foreground of a frame by comparing the frame with a modeled background.

11. The device according to claim 10, further comprising:
a preprocessing module (305) configured for performing video image preprocessing, comprising: noise removal, image resizing, illumination compensation, and image registration.

12. The device according to claim 7, wherein
the frame extracting module (303) is configured for extracting a frame every N frames before and after the key-movement frame to obtain M frames before the key-movement frame and M frames after the key-movement frame, and forming the video summary using the key-movement frame and the frames extracted.

## Patentansprüche

1. Verfahren zum Zusammenfassen eines Überwachungsvideos, umfassend:
Filtern eines Vordergrunds von jedem Einzelbild eines Überwachungsvideos und Positionieren eines sich bewegenden Objekts (S101);
nachdem jedes Bild die Filterung durchlaufen hat, Bestimmen, ob ein Bild ein Schlüsselbewegungsbild ist, indem eine Beziehung zwischen einem ersten sich bewegenden Objekt im Bild und einem zweiten sich bewegenden Objekt in einem vorhergehenden Bild (S102) erkannt wird; und
Extrahieren von Bildern vor und nach einem bestimmten Schlüsselbewegungsbild und Bilden einer Videozusammenfassung unter Verwendung des Schlüsselbewegungsbildes und der extrahierten Bilder (S103),
wobei die Bestimmung, ob ein Bild ein Schlüsselbewegungsbild ist, durch Erfassen einer Beziehung zwischen einem ersten sich bewegenden Objekt in dem Bild und einem zweiten sich bewegenden Objekt in einem vorhergehenden Bild umfasst:
Erkennen, ob die Gesamtzahl der ersten sich bewegenden Objekte im Bild identisch ist mit der Gesamtzahl der zweiten sich bewegenden Objekte im vorhergehenden Bild (S201); wenn die beiden Gesamtzahlen voneinander verschieden sind, Bestimmen des Bildes als Schlüsselbewegungsbild (S207); oder anderweitig, wenn die beiden Gesamtzahlen identisch sind, für jedes erste sich bewegende Objekt im Bild (S205),
Bestimmen, ob es im vorhergehenden Bild ein zweites sich bewegendes Objekt gibt, das mit dem jeweils ersten sich bewegenden Objekt (S202) in Beziehung steht; wenn mindestens ein erstes sich bewegendes Objekt in dem Bild vorhanden ist, zu dem kein zweites sich bewegendes Objekt in dem vorhergehenden Bild in Beziehung steht, Bestimmen des Bildes als Schlüsselbewegungsbild (S207); oder anderweitig, wenn das jeweils erste sich bewegende Objekt im Bild mit einem zweiten sich bewegenden Objekt im vorhergehenden Bild verknüpft ist,
Detektieren einer Verschiebung und einer morphologischen Veränderung des jeweils ersten sich bewegenden Objekts in Bezug auf das zweite sich bewegende Objekt in dem vorhergehenden Bild, bezogen auf das jeweils erste sich bewegende Objekt (S203, S204); wenn sich mindestens ein erstes sich bewegendes Objekt in dem Bild befindet, mit einer Verschiebung, die einer ersten Vorgabebedingung entspricht, oder mit einer morphologischen Veränderung, die einer zweiten Vorgabebedingung entspricht, wobei das Bild als Schlüsselbewegungsbild (S207) bestimmt wird; oder anderweitig, wenn sich kein erstes sich bewegendesObjekt in dem Bild befindet, mit einer Verschiebung, die der ersten Vorgabebedingung entspricht, oder einer morphologischen Änderung, die einer zweiten Vorgabebedingung entspricht, wobei festgestellt wird, dass das Bild kein Schlüsselbewegungsbild (S206) ist, wobei
die erste Vorgabebedingung erfordert, dass ein Verhältnis eines Abstands zwischen einem Schwerpunkt des jeweils ersten sich bewegenden Objekts und einem Schwerpunkt des zweiten sich bewegenden Objekts im vorhergehenden Bild, bezogen auf das jeweils erste sich bewegende Objekt, zu einer Diagonale eines Rechtecks, das das zweite sich bewegende Objekt im vorhergehenden Bild umschreibt, größer oder gleich einem voreingestellten Schwellenwert T3 ist, und die zweite Vorgabebedingung erfordert, dass ein Verhältnis einer absoluten Änderung eines Seitenverhältnisses eines Rechtecks, das das jeweils erste sich bewegende Objekt in Bezug auf ein Rechteck umschreibt, das das zweite sich bewegende Objekt in dem vorangehenden Bild umschreibt, bezogen auf das jeweils erste sich bewegende Objekt zu einem Seitenverhältnis des Rechtecks, dass das zweite sich bewegende Objekt in dem vorangehenden Bild umschreibt, größer oder gleich einem voreingestellten Schwellenwert T4 ist.

2. Verfahren nach Anspruch 1, wobei die Bestimmung, ob es ein zweites sich bewegendes Objekt in dem vorangehenden Bild gibt, bezogen auf das jeweils erste sich bewegende Objekt, umfasst:
Berechnen eines Verhältnisses S eines Bereichs, in dem sich das jeweils erste sich bewegende Objekt mit einem zweiten sich bewegenden Objekt im vorhergehenden Bild überlappt, zu einem Bereich des zweiten sich bewegenden Objekts im vorhergehenden Bild;
Berechnen einer Histogrammähnlichkeit H des jeweils ersten sich bewegenden Objekts mit dem zweiten sich bewegenden Objekt im vorhergehenden Bild; und
Bestimmen, dass das jeweils erste sich bewegende Objekt mit dem zweiten sich bewegenden Objekt im vorhergehenden Bild in Beziehung steht, wenn das berechnete S größer als ein voreingestellter Schwellenwert T1 und das berechnete H größer als ein voreingestellter Schwellenwert T2 ist.

3. Verfahren nach Anspruch 1, wobei das Filtern eines Vordergrunds jedes Bildes eines Überwachungsvideos und das Positionieren eines sich bewegenden Objekts umfasst:
Erhalten irgendeines vollständigen sich bewegenden Objekts im Vordergrund durch Entfernen irgendeines verstreuten kleinen Objekts und Verbinden von Fragmenten eines zerbrochenen Objekts im Vordergrund; und
Berechnen einer Fläche eines vollständigen sich bewegenden Objekts und Positionieren eines sich bewegenden Objekts mit einer Fläche, die größer oder gleich einem Schwellenwert T6 ist, wobei
T6 = p*A, wobei A ein Videobildbereich und P ein voreingestellter Koeffizient ist.

4. Verfahren nach Anspruch 1, ferner umfassend: Vor dem Filtern eines Vordergrunds von jedem Einzelbild eines Überwachungsvideos, wobei eine Bildvordergrunderkennung auf dem Überwachungsvideo durchgeführt wird durch
Durchführen von Bildhintergrundtraining und Modellieren auf dem Überwachungsvideo und Erhalten eines Vordergrundes eines Bildes durch Vergleichen des Bildes mit einem modellierten Hintergrund (S104).

5. Verfahren nach Anspruch 4, ferner umfassend: Vor der Erkennung von Vordergrundbildern auf dem Überwachungsvideo,
Durchführen einer Videobildvorverarbeitung (S105) umfassend: Rauschunterdrückung, Bildgrößenanpassung, Beleuchtungskompensation und Bildregistrierung.

6. Verfahren nach Anspruch 1, wobei das Extrahieren von Bildern vor und nach einem bestimmten Schlüsselbewegungsbild und das Bilden einer Videozusammenfassung unter Verwendung des Schlüsselbewegungsbildes und der extrahierten Bilder umfasst:
Extrahieren eines Bildes alle N Bilder vor und nach dem Schlüsselbewegungsbild, um M Bilder vor dem Schlüsselbewegungsbild und M Bilder nach dem Schlüsselbewegungsbild zu erhalten, und Bilden der Videozusammenfassung unter Verwendung des Schlüsselbewegungsbildes und der extrahierten Bilder.

7. Vorrichtung zum Zusammenfassen eines Überwachungsvideos, umfassend:
Ein Filtermodul (301), das zum Filtern eines Vordergrunds jedes Bildes eines Überwachungsvideos und zum Positionieren eines sich bewegenden Objekts konfiguriert ist;
Schlüsselbewegungsbildermittlungsmodul (302), konfiguriert für: Nachdem jedes Bild die Filterung durchlaufen hat, Bestimmen, ob ein Bild ein Schlüsselbewegungsbild ist, indem eine Beziehung zwischen einem ersten sich bewegenden Objekt im Bild und einem zweiten sich bewegenden Objekt in einem vorhergehenden Bild erkannt wird; und
ein Bildextraktionsmodul (303), das zum Extrahieren von Bildern vor und nach einem bestimmten Schlüsselbewegungsbild konfiguriert ist und eine Videozusammenfassung unter Verwendung des Schlüsselbewegungsbildes und der extrahierten Bilder bildet, wobei
das Schlüsselbewegungsbildermittlungsmodul (302) konfiguriert ist für: Erkennen, ob die Gesamtzahl der ersten sich bewegenden Objekte im Bild identisch ist mit der Gesamtzahl der zweiten sich bewegenden Objekte im vorhergehenden Bild; wenn sich die beiden Gesamtzahlen voneinander unterscheiden, wird das Bild als Schlüsselbewegungsbild bestimmt; oder anderweitig, wenn die beiden Gesamtzahlen identisch sind, für jedes erste sich bewegende Objekt im Bild,
Bestimmen, ob es im vorhergehenden Bild ein zweites sich bewegendes Objekt gibt, das mit jedem ersten sich bewegenden Objekt in Beziehung steht; wenn mindestens ein erstes sich bewegendes Objekt in dem Bild vorhanden ist, zu dem kein zweites sich bewegendes Objekt in dem vorhergehenden Bild in Beziehung steht, Bestimmen des Bildes als Schlüsselbewegungsbild; oder anderweitig, wenn das jeweils erste sich bewegende Objekt im Bild mit einem zweiten sich bewegenden Objekt im vorhergehenden Bild verknüpft ist,
Detektieren einer Verschiebung und einer morphologischen Veränderung des jeweils ersten sich bewegendenObjekts in Bezug auf das zweite sich bewegende Objekt in dem vorhergehenden Bild, bezogen auf das jeweils erste sich bewegende Objekt; wenn sich mindestens ein erstes sich bewegendes Objekt in dem Bild befindet, mit einer Verschiebung, die einer ersten Vorgabebedingung entspricht, oder mit einer morphologischen Veränderung, die einer zweiten Vorgabebedingung entspricht, wobei das Bild als Schlüsselbewegungsbild bestimmt wird; oder anderweitig, wenn sich kein erstes sich bewegendes Objekt in dem Bild befindet, mit einer Verschiebung, die der ersten Vorgabebedingung entspricht, oder einer morphologischen Änderung, die einer zweiten Vorgabebedingung entspricht, wobei festgestellt wird, dass das Bild kein Schlüsselbewegungsbild ist, wobei
die erste Vorgabebedingung erfordert, dass ein Verhältnis eines Abstands zwischen einem Schwerpunkt des jeweils ersten sich bewegenden Objekts und einem Schwerpunkt des zweiten sich bewegenden Objekts im vorhergehenden Bild, bezogen auf das jeweils erste sich bewegende Objekt, zu einer Diagonale eines Rechtecks, das das zweite sich bewegende Objekt im vorhergehenden Bild umschreibt, größer oder gleich einem voreingestellten Schwellenwert T3 ist, und die zweite Vorgabebedingung erfordert, dass ein Verhältnis einer absoluten Änderung eines Seitenverhältnisses eines Rechtecks, das das jeweils erste sich bewegende Objekt in Bezug auf ein Rechteck umschreibt, das das zweite sich bewegende Objekt in dem vorangehenden Bild umschreibt, bezogen auf das jeweils erste sich bewegende Objekt zu einem Seitenverhältnis des Rechtecks, das das zweite sich bewegende Objekt in dem vorangehenden Bild umschreibt, größer oder gleich einem voreingestellten Schwellenwert T4 ist.

8. Vorrichtung nach Anspruch 7, wobei
das Schlüsselbewegungsbildermittlungsmodul (302) konfiguriert ist für: Berechnen eines Verhältnisses S eines Bereichs, in dem sich das jeweils erste sich bewegende Objekt mit einem zweiten sich bewegenden Objekt im vorhergehenden Bild überlappt, zu einem Bereich des zweiten sich bewegenden Objekts im vorhergehenden Bild; Berechnen einer Histogrammähnlichkeit H des jeweils ersten sich bewegenden Objekts mit dem zweiten sich bewegenden Objekt im vorhergehenden Bild; und Bestimmen, dass das jeweils erste sich bewegende Objekt mit dem zweiten sich bewegenden Objekt im vorhergehenden Bild in Beziehung steht, wenn das berechnete S größer als ein voreingestellter Schwellenwert T1 und das berechnete H größer als ein voreingestellter Schwellenwert T2 ist.

9. Vorrichtung nach Anspruch 7, wobei
das Filtermodul (301) konfiguriert ist um: irgendein vollständiges sich bewegendes Objekt im Vordergrund durch Entfernen irgendeines verstreuten kleinen Objekts und Verbinden von Fragmenten eines zerbrochenen Objekts im Vordergrund zu erhalten; und Berechnen einer Fläche eines vollständigen sich bewegenden Objekts und Positionieren irgendeines sich bewegenden Objekts mit einer Fläche, die größer oder gleich einem Schwellenwert T6 ist, wobei
T6 = p*A, wobei A ein Videobildbereich und P ein voreingestellter Koeffizient ist.

10. Vorrichtung nach Anspruch 7, ferner umfassend:
Ein Vordergrunderkennungsmodul (304), das zum Durchführen von Videobildhintergrundtraining und -modellierung konfiguriert ist, und zum Erhalten eines Vordergrunds eines Bildes durch Vergleichen des Bildes mit einem modellierten Hintergrund.

11. Vorrichtung nach Anspruch 10, ferner umfassend:
Ein Vorverarbeitungsmodul (305), das so konfiguriert ist, dass es eine Videobildvorverarbeitung durchführt, umfassend: Rauschunterdrückung, Bildgrößenanpassung, Beleuchtungskompensation und Bildregistrierung.

12. Vorrichtung nach Anspruch 7, wobei
das Bildextraktionsmodul (303) so konfiguriert ist, dass es ein Bild alle N Bilder vor und nach dem Schlüsselbewegungsbild extrahiert, um M Bilder vor dem Schlüsselbewegungsbild und M Bilder nach dem Schlüsselbewegungsbild zu erhalten, und die Videozusammenfassung unter Verwendung des Schlüsselbewegungsbildes und der extrahierten Bilder bildet.

## Revendications

1. Procédé pour résumer une vidéo de surveillance, comprenant :
le filtrage d'un premier plan de chaque trame d'une vidéo de surveillance et le positionnement d'un objet mobile (S101) ;
après le passage de chaque trame à travers le filtrage, la détermination si une trame est une trame de mouvement clé en détectant une relation entre un premier objet mobile dans la trame et un deuxième objet mobile dans une trame précédente (S102) ; et
l'extraction de trames avant et après une trame de mouvement clé déterminée et la formation d'un résumé vidéo en utilisant la trame de mouvement clé et les trames extraites (S103),
dans lequel la détermination si une trame est une trame de mouvement clé en détectant une relation entre un premier objet mobile dans la trame et un deuxième objet mobile dans une trame précédente comprend :
la détection si un nombre total de premiers objets mobiles dans la trame est identique à un nombre total de deuxièmes objets mobiles dans la trame précédente (S201) ; lorsque les deux nombres totaux sont différents l'un de l'autre, la détermination de la trame en tant que trame de mouvement clé (S207) ; ou, autrement, lorsque les deux nombres totaux sont identiques l'un à l'autre, pour chaque premier objet mobile dans la trame (S205),
la détermination s'il y a un deuxième objet mobile dans la trame précédente associée à chaque premier objet mobile (S202) ; lorsqu'il y a au moins un premier objet mobile dans la trame auquel aucun deuxième objet mobile dans la trame précédente n'est associé, la détermination de la trame en tant que trame de mouvement clé (S207) ; ou, autrement, lorsque chaque premier objet mobile dans la trame est associé à un deuxième objet mobile dans la trame précédente,
la détection d'un déplacement et d'un changement morphologique de chaque premier objet mobile par rapport au deuxième objet mobile dans la trame précédente associé à chaque premier objet mobile (S203, S204) ; lorsqu'il y a au moins un premier objet mobile dans la trame avec un déplacement satisfaisant à une première condition prédéterminée ou avec un changement morphologique satisfaisant à une deuxième condition prédéterminée, la détermination de la trame en tant que trame de mouvement clé (S207) ; ou, autrement, lorsqu'il n'y a aucun premier objet mobile dans la trame avec un déplacement satisfaisant à une première condition prédéterminée ou un changement morphologique satisfaisant à une deuxième condition prédéterminée, la détermination que la trame n'est pas une trame de mouvement clé (S206), dans lequel
la première condition prédéterminée nécessite qu'un rapport entre une distance entre un centroïde de chaque premier objet mobile et un centroïde du deuxième objet mobile dans la trame précédente associé à chaque premier objet mobile et une diagonale d'un rectangle circonscrivant le deuxième objet mobile dans la trame précédente soit supérieur ou égal à un seuil T3 prédéterminé, et la deuxième condition prédéterminée nécessite qu'un rapport entre un changement absolu d'un rapport d'aspect d'un rectangle circonscrivant chaque premier objet mobile par rapport à un rectangle circonscrivant le deuxième objet mobile dans la trame précédente associé à chaque premier objet mobile et un rapport d'aspect du rectangle circonscrivant le deuxième objet mobile dans la trame précédente soit supérieur ou égal à un seuil T4 prédéterminé.

2. Procédé selon la revendication 1, dans lequel la détermination s'il y a un deuxième objet mobile dans la trame précédente associé à chaque premier objet mobile comprend :
le calcul d'un rapport S entre une aire dans laquelle chaque premier objet mobile recouvre un deuxième objet mobile dans la trame précédente et une aire du deuxième objet mobile dans la trame précédente ;
le calcul d'une similarité d'histogramme H de chaque premier objet mobile par rapport au deuxième objet mobile dans la trame précédente ; et
la détermination que chaque premier objet mobile est associé au deuxième objet mobile dans la trame précédente lorsque le rapport S calculé est supérieur à un seuil T1 prédéterminé et que la similarité d'histogramme H calculée est supérieure à un seuil T2 prédéterminé.

3. Procédé selon la revendication 1, dans lequel le filtrage d'un premier plan de chaque trame d'une vidéo de surveillance et le positionnement d'un objet mobile comprennent :
l'obtention de tout objet mobile complet dans le premier plan en retirant tout petit objet dispersé et en joignant les fragments d'un objet brisé dans le premier plan ; et
le calcul d'une aire d'un objet mobile complet et le positionnement de tout objet mobile avec une aire supérieure ou égale à un seuil T6, dans lequel
T6 = p*A, A étant une aire d'image vidéo et P étant un coefficient prédéterminé.

4. Procédé selon la revendication 1, comprenant en outre : avant le filtrage d'un premier plan de chaque trame d'une vidéo de surveillance, l'exécution d'une détection de premier plan d'image sur la vidéo de surveillance en
effectuant un apprentissage et une modélisation d'arrière-plan d'image sur la vidéo de surveillance, et en obtenant un premier plan d'une trame en comparant la trame avec un arrière-plan modélisé (S104).

5. Procédé selon la revendication 4, comprenant en outre : avant l'exécution de la détection de premier plan d'image sur la vidéo de surveillance,
l'exécution d'un prétraitement d'image vidéo (S105), comprenant : le retrait du bruit, le redimensionnement des images, la compensation de l'éclairage, et l'alignement des images.

6. Procédé selon la revendication 1, dans lequel l'extraction de trames avant et après une trame de mouvement clé déterminée et la formation d'un résumé vidéo en utilisant la trame de mouvement clé et les trames extraites comprennent :
l'extraction d'une trame toutes les N trames avant et après la trame de mouvement clé pour obtenir M trames avant que la trame de mouvement clé et M trames après la trame de mouvement clé, et la formation du résumé vidéo en utilisant la trame de mouvement clé et les trames extraites.

7. Dispositif pour résumer une vidéo de surveillance, comprenant :
un module de filtrage (301) configuré pour filtrer un premier plan de chaque trame d'une vidéo de surveillance et pour positionner un objet mobile ;
un module de détermination de trame de mouvement clé (302) configuré pour : après le passage de chaque trame à travers le filtrage, déterminer si une trame est une trame de mouvement clé en détectant une relation entre un premier objet mobile dans la trame et un deuxième objet mobile dans une trame précédente ; et
un module d'extraction de trame (303) configuré pour extraire des trames avant et après une trame de mouvement clé déterminée et former un résumé vidéo en utilisant la trame de mouvement clé et les trames extraites, dans lequel
le module de détermination de trame de mouvement clé (302) est configuré pour : détecter si un nombre total de premiers objets mobiles dans la trame est identique à un nombre total de deuxièmes objets mobiles dans la trame précédente ; lorsque les deux nombres totaux sont différents l'un de l'autre, déterminer la trame en tant que trame de mouvement clé ; ou, autrement, lorsque les deux nombres totaux sont identiques l'un à l'autre, pour chaque premier objet mobile dans la trame,
déterminer s'il y a un deuxième objet mobile dans la trame précédente associé à chaque premier objet mobile ; lorsqu'il y a au moins un premier objet mobile dans la trame auquel aucun deuxième objet mobile dans la trame précédente n'est associé, déterminer la trame en tant que trame de mouvement clé ; ou, autrement, lorsque chaque premier objet mobile dans la trame est associé à un deuxième objet mobile dans la trame précédente,
détecter un déplacement et un changement morphologique de chaque premier objet mobile par rapport au deuxième objet mobile dans la trame précédente associé à chaque premier objet mobile ; lorsqu'il y a au moins un premier objet mobile dans la trame avec un déplacement satisfaisant à une première condition prédéterminée ou avec un changement morphologique satisfaisant à une deuxième condition prédéterminée, déterminer la trame en tant que trame de mouvement clé ; ou, autrement, lorsqu'il n'y a aucun premier objet mobile dans la trame avec un déplacement satisfaisant à une première condition prédéterminée ou avec un changement morphologique satisfaisant à une deuxième condition prédéterminée, déterminer que la trame n'est pas une trame de mouvement clé, dans lequel
la première condition prédéterminée nécessite qu'un rapport entre une distance entre un centroïde de chaque premier objet mobile et un centroïde du deuxième objet mobile dans la trame précédente associé à chaque premier objet mobile et une diagonale d'un rectangle circonscrivant le deuxième objet mobile dans la trame précédente soit supérieur ou égal à un seuil T3 prédéterminé, et la deuxième condition prédéterminée nécessite qu'un rapport entre un changement absolu d'un rapport d'aspect d'un rectangle circonscrivant chaque premier objet mobile par rapport à un rectangle circonscrivant le deuxième objet mobile dans la trame précédente associé à chaque premier objet mobile et un rapport d'aspect du rectangle circonscrivant le deuxième objet mobile dans la trame précédente soit supérieur ou égal à un seuil T4 prédéterminé.

8. Dispositif selon la revendication 7, dans lequel
le module de détermination de trame de mouvement clé (302) est configuré pour : calculer un rapport S entre une aire dans laquelle chaque premier objet mobile recouvre un deuxième objet mobile dans la trame précédente et une aire du deuxième objet mobile dans la trame précédente ; calculer une similarité d'histogramme H de chaque premier objet mobile par rapport au deuxième objet mobile dans la trame précédente ; et déterminer que chaque premier objet mobile est associé au deuxième objet mobile dans la trame précédente lorsque le rapport S calculé est supérieur à un seuil T1 prédéterminé et que la similarité d'histogramme H calculée est supérieure à un seuil T2 prédéterminé.

9. Dispositif selon la revendication 7, dans lequel
le module de filtrage (301) est configuré pour : obtenir tout objet mobile complet dans le premier plan en retirant tout petit objet dispersé et en joignant les fragments d'un objet brisé dans le premier plan ; et calculer une aire d'un objet mobile complet et positionner tout objet mobile avec une aire supérieure ou égale à un seuil T6, dans lequel
T6 = p*A, A étant une aire d'image vidéo et P étant un coefficient prédéterminé.

10. Dispositif selon la revendication 7, comprenant en outre :
un module de détection de premier plan (304) configuré pour effectuer un apprentissage et une modélisation d'arrière-plan d'image vidéo, et obtenir un premier plan d'une trame en comparant la trame avec un arrière-plan modélisé.

11. Dispositif selon la revendication 10, comprenant en outre :
un module de prétraitement (305) configuré pour effectuer un prétraitement d'image vidéo, comprenant : le retrait du bruit, le redimensionnement des images, la compensation de l'éclairage, et l'alignement des images.

12. Dispositif selon la revendication 7, dans lequel
le module d'extraction de trame (303) est configuré pour extraire une trame toutes les N trames avant et après la trame de mouvement clé pour obtenir M trames avant la trame de mouvement clé et M trames après la trame de mouvement clé, et former le résumé vidéo en utilisant la trame de mouvement clé et les trames extraites.
